# EUROPÄISCHE PATENTSCHRIFT

(11) **EP 3 199 333 B1**
(45) Veröffentlichungstag und Bekanntmachung des Hinweises auf die Patenterteilung: **03.03.2021**
(21) Anmeldenummer: 17151775.8
(22) Anmeldetag: 17.01.2017
(51) Int. Cl.: B30B 11/08, B30B 15/32

(54) **RUNDLÄUFERTABLETTENPRESSE**
ROTARY PRESS FOR TABLETS
PRESSE ROTATIVE POUR COMPRIMÉS

(30) Priorität: 21.01.2016 DE 102016101028
(43) Veröffentlichungstag der Anmeldung: 02.08.2017
(73) Patentinhaber: Fette Compacting GmbH, 21493 Schwarzenbek (DE)
(72) Erfinder: Arning, Andreas, 21493 Talkau (DE); Petersen, Nils, 21522 Hohnstorf (DE)
(74) Vertreter: Hauck Patentanwaltspartnerschaft mbB

(56) Entgegenhaltungen:
- EP-A1- 2 664 551
- EP-A2- 2 036 707
- DE-A1- 2 450 065
- DE-A1- 3 639 918
- DE-A1-102013 202 975
- DE-C1- 4 312 550

## Beschreibung

Die Erfindung betrifft eine Rundläufertablettenpresse, umfassend einen drehend angetriebenen Rotor mit einer Matrizenscheibe mit Matrizenbohrungen und einer Mehrzahl von mit der Matrizenscheibe umlaufenden Ober- und Unterstempeln zum Erzeugen von Tabletten in den Matrizenbohrungen, wobei der Matrizenscheibe des Rotors ein Abstreifer zugeordnet ist, der in den Matrizenbohrungen erzeugte und durch die Unterstempel aus den Matrizenbohrungen ausgestoßene Tabletten von der Oberseite der Matrizenplatte in einen Gutkanal lenkt, wobei in Drehrichtung des Rotors vor dem Gutkanal ein Schlechtkanal angeordnet ist, dem eine Aussortiereinrichtung zum Aussortieren von Tabletten in den Schlechtkanal zugeordnet ist, wobei ferner eine Prüfeinrichtung an der Rundläufertablettenpresse angeordnet ist, welche mindestens eine Eigenschaft der in den Matrizenbohrungen erzeugten Tabletten überprüft und ein Schlechtsignal für eine Steuereinrichtung erzeugt, wenn die geprüfte Eigenschaft einer Tablette von einem Sollwert unzulässig abweicht, so dass die Steuereinrichtung die Aussortiereinrichtung zur Aussortierung der betreffenden Tablette betätigt.

In einer Rundläufertablettenpresse hergestellte Tabletten werden regelmäßig mittels eines Abstreifers von der sich unter dem Abstreifer hindurch drehenden Matrizenscheibe in einen Gutkanal gelenkt. Der Abstreifer kann beispielsweise eine sichelförmige Abstreifkante besitzen. Bekanntlich verpressen die Ober- und Unterstempel einer Rundläufertablettenpresse in die Matrizenbohrungen der Matrizenscheibe gefülltes pulverförmiges Material in den Matrizenbohrungen zu Tabletten. Nach dem Verpressen werden die Tabletten durch die Unterstempel aus den Matrizenbohrungen heraus auf die Oberseite der Matrizenscheibe geschoben, so dass sie durch den Abstreifer von der Matrizenscheibe abgestreift werden können.

Eine Prüfeinrichtung prüft während der Tablettenherstellung die Tabletten auf bestimmte Parameter. Beispielsweise kann durch eine Presskraftmesseinrichtung überprüft werden, ob die im Zuge des Verpressens der Tablette auftretende Presskraft in einem zulässigen Sollwertbereich liegt. Stellt die Prüfeinrichtung eine unzulässige Abweichung von einem Sollwert fest, erzeugt sie ein Schlechtsignal, welches an eine Steuereinrichtung, beispielsweise die Maschinensteuerung der Rundläufertablettenpresse, gegeben wird. Die Steuereinrichtung steuert dann die Aussortiereinrichtung zum gezielten Aussortieren der betreffenden Tablette an. Dazu kann die Aussortiereinrichtung als Auswerfdüse ausgebildet sein, die einen Gasstoß erzeugt, insbesondere einen Luftstoß, der die betreffende Tablette vor Erreichen des Abstreifers von der Matrizenscheibe in einen in Drehrichtung des Rotors vor dem Gutkanal angeordneten Schlechtkanal bläst.

Eine solche Rundläufertablettenpresse ist beispielsweise bekannt aus EP 1 688 243 B1. Dabei müssen die in den Schlechtkanal oder den Gutkanal gelangenden Tabletten weiter durch den Schlechtkanal bzw. den Gutkanal gefördert werden. Hierzu ist bei der aus EP 1 688 243 B1 bekannten Rundläufertablettenpresse jeweils eine Düsenanordnung für den Schlechtkanal und für den Gutkanal vorgesehen. Die Düsenanordnungen erzeugen einen Luftstrom in den Schlechtkanal bzw. in den Gutkanal, so dass die Tabletten durch den Schlechtkanal bzw. den Gutkanal abgefördert werden. Eine weitere Düsenanordnung ist vorgesehen, die einen zu einem Umlenkabschnitt des Abstreifers gerichteten Luftstrom erzeugt. Die Düsenanordnungen können dabei eine Reihe nebeneinander angeordnete Düsenöffnungen aufweisen, so dass ein Luftschleier bzw. Luftvorhang erzeugt wird. Nachteilig ist dabei, dass die Düsenanordnungen zu Aufwirbelungen von Tablettenstaub und einer unerwünschten Kontamination der Rundläufertablettenpresse bzw. der Umgebung führen können.

Aus US 8 801 416 A ist es bekannt, in einer Tablettenpresse hergestellte Tabletten durch Unterdruckeinrichtungen abzufördern. Dabei werden Tabletten von der Matrizenscheibe zunächst schwerkraftbedingt einem Tablettenreservoir zugeführt. Aus diesem Tablettenreservoir werden die Tabletten dann durch eine Unterdruckeinrichtung weitergefördert. Nachteilig ist dabei, dass beispielsweise bei einem Stopp der Presse lose Tabletten auf der Matrizenscheibe liegen bleiben können. Diese können bei einem anschließenden Wiederanfahren des Pressenbetriebs aufgrund ihrer Trägheit mit nachfolgend hergestellten Tabletten kollidieren und zu Tablettenstauungen führen. Außerdem ist der Aufbau mit einem Tablettenreservoir aufwendig.

Aus DE 10 2013 202 975 A1 ist eine Rundläufertablettenpresse gemäß dem Oberbegriff des Anspruchs 1 mit einer Einzelsortiervorrichtung zur Sortierung von Tabletten bekannt. Auszusortierende Tabletten werden über einen Luftstoß oder einen Schieber in einen ersten Ausstoßkanal geleitet. Die übrigen Tabletten werden in einen zweiten Ausstoßkanal geleitet. Um zu kontrollieren, ob stets nur die von den ausgewählten Pressstempeln gepressten Tabletten aussortiert wurden, umfasst die Einzelsortiervorrichtung eine Detektiervorrichtung, die zum Beispiel ein Visionssystem sein kann, etwa eine Lichtschranke, ein Lichttaster oder ein Kamerasystem.

Aus DE 24 50 065 A1 ist eine Vorrichtung zum Abfördern von Tabletten insbesondere vom Matrizenteller einer Rundlauftablettenpresse bekannt, bei der ein Saugförderrohr an der Tablettenauswurfstelle mündet und an das Gehäuse eines Zellenrades angeschlossen ist, das im Bereich einer jeden Zelle eine perforierte Wandung aufweist, die an einer Absaugöffnung im Gehäuse vorbeiläuft, an welche eine Unterdruckleitung angeschlossen ist.

Bei Rundläufertablettenpressen im Stand der Technik der beschriebenen Art ist eine eindeutige Detektion von aussortierten Schlechttabletten nicht immer gewährleistet. So wird für die Detektion der aussortierten Schlechttabletten der Druckaufbau der jeweiligen Düsenanordnung überwacht. Es kann zu fehlerhaften Detektionsergebnissen kommen, wenn die Düsenanordnung beispielsweise durch aufwirbelnden Staub verstopft ist und hierdurch ein größerer Druck aufgebaut wird. Außerdem besteht oftmals der Wunsch, eine redundante Detektion aussortierter Tabletten zu realisieren. Dies bietet der Stand der Technik nicht.

Ausgehend von dem erläuterten Stand der Technik liegt der Erfindung die Aufgabe zugrunde, eine Rundläufertablettenpresse der eingangs genannten Art bereitzustellen, bei der aussortierte Schlechttabletten eindeutig detektierbar sind und insbesondere auch eine redundante Detektion aussortierter Tabletten realisiert werden kann.

Die Erfindung löst die Aufgabe durch den Gegenstand von Anspruch 1. Vorteilhafte Ausgestaltungen finden sich in den abhängigen Ansprüchen, der Beschreibung und den Figuren.

Bei der erfindungsgemäß vorgesehenen Prüfeinrichtung kann es sich beispielsweise um eine Presskraftmesseinrichtung der Rundläufertablettenpresse handeln, die die im Zuge des Pressens der Tabletten erzeugte Presskraft misst. Bei der Steuereinrichtung kann es sich beispielsweise um die Maschinensteuerung der Rundläufertablettenpresse handeln. Wie eingangs erläutert, überprüft die Prüfeinrichtung mindestens eine Eigenschaft der hergestellten Tabletten, beispielsweise die im Zuge der Herstellung erzeugte Presskraft, und vergleicht diese Eigenschaft mit einem Sollwert. Wird eine unzulässige Abweichung von dem Sollwert festgestellt, gibt die Prüfeinrichtung ein entsprechendes Schlechtsignal an die Steuereinrichtung. Daraufhin steuert die Steuereinrichtung die Aussortiereinrichtung derart an, dass die betreffende, als schlecht erkannte Tablette in den Schlechtkanal geleitet wird. Bei der Aussortiereinrichtung kann es sich um eine Auswerfdüse handeln, die einen Gasstoß erzeugt, vorzugsweise einen Luftstoß, durch den auszusortierende Tabletten vor Erreichen des Abstreifers von der Matrizenscheibe in den Schlechtkanal geblasen wird. Es ist aber auch eine mechanische Aussortiereinrichtung denkbar, die auszusortierende Tabletten mechanisch in den Schlechtkanal leitet.

Erfindungsgemäß ist in dem Schlechtkanal eine erste Detektoreinrichtung angeordnet, die durch den Schlechtkanal geleitete Tabletten detektiert. Weiterhin ist in dem Gutkanal eine zweite Detektoreinrichtung angeordnet, die durch den Gutkanal geleitete Tabletten detektiert. Wie eingangs erläutert, erfolgt im Stand der Technik ein Detektieren aussortierter Tabletten insbesondere über eine Überwachung des Druckaufbaus von zum Transport der Tabletten durch den Schlechtkanal bzw. den Gutkanal eingesetzten Düsenanordnungen. Wie ebenfalls eingangs erläutert, kann es beispielsweise bei einer Verstopfung der Düsenanordnungen zu fehlerhaften Detektionsergebnissen kommen. Dieses Problem wird erfindungsgemäß überwunden. Außerdem besteht, wie ebenfalls eingangs erläutert, oftmals der Wunsch, eine redundante Detektion aussortierter Tabletten zu realisieren. Dies ist mit der Erfindung möglich.

Indem sowohl in dem Schlechtkanal als auch in dem Gutkanal eine entsprechende Detektoreinrichtung platziert wird, kann einerseits die durch den Schlechtkanal geförderte, aussortierte Tablette direkt detektiert werden. Andererseits kann in dem durch den Gutkanal abgeförderten Tablettenstrom eine der aussortierten Schlechttablette entsprechende Lücke detektiert werden, und damit indirekt die aussortierte Tablette. Damit ist eine zuverlässige redundante Überwachung der Tablettenaussortierung gewährleistet. Fehlerhafte Detektionsergebnisse durch verstopfte Düsenöffnungen oder dergleichen sind ausgeschlossen.

Ein weiterer Vorteil der erfindungsgemäß vorgesehenen Detektoreinrichtungen ist das Erkennen eines Tablettenstaus. Im Stand der Technik werden hierzu aufwendige kapazitive Staumelder eingesetzt. Durch den Einsatz der erfindungsgemäßen Detektoreinrichtungen kann ein Tablettenstau einfach festgestellt werden, wenn die entsprechende Detektoreinrichtung keinerlei Unterbrechungen oder eine andauernde Unterbrechung detektiert.

Die erste Detektoreinrichtung kann eine Lichtschranke umfassen und/oder die zweite Detektoreinrichtung kann eine Lichtschranke umfassen. Bei den Lichtschranken kann es sich insbesondere um Rohrlichtschranken handeln. Mit Lichtschranken ist eine besonders zuverlässige und fehlerunabhängige Erkennung von Tabletten bzw. Lücken im Tablettenstrom möglich.

Weiterhin ist erfindungsgemäß in dem Schlechtkanal eine erste Unterdruckeinrichtung derart angeordnet, dass durch die Aussortiereinrichtung in Richtung des Schlechtkanals geleitete Tabletten durch den von der ersten Unterdruckeinrichtung erzeugten Unterdruck durch den Schlechtkanal abgefördert werden. In dem Gutkanal ist entsprechend eine zweite Unterdruckeinrichtung derart angeordnet, dass durch den Abstreifer in Richtung des Gutkanals geleitete Tabletten durch den von der zweiten Unterdruckeinrichtung erzeugten Unterdruck von der Matrizenscheibe abgesaugt und durch den Gutkanal abgefördert werden. Die erste Unterdruckeinrichtung kann eine Venturi-Düse sein und/oder die zweite Unterdruckeinrichtung kann eine Venturi-Düse sein.

In Richtung des Schlechtkanals geleitete Tabletten werden durch den von der ersten Unterdruckeinrichtung erzeugten Sog durch den Schlechtkanal abgefördert. In Richtung des Gutkanals geleitete Tabletten werden durch den von der zweiten Unterdruckeinrichtung erzeugten Sog von der Matrizenscheibe abgesaugt und durch den Gutkanal abgefördert. Bei einer Unterdruckeinrichtung wird beispielsweise durch das Vorsehen einer Querschnittsverengung oder das ringförmige Einblasen eines Druckgases, beispielsweise von Druckluft, ein Unterdruck erzeugt. Aufgrund dieses Unterdrucks wird Gas, beispielsweise Luft, angesaugt und in Fließrichtung durch die weitere Kanalleitung mitgerissen. Dieses aufgrund des durch die Unterdruckeinrichtung erzeugten Sogs mitgerissene Gas, insbesondere Luft, fördert die Tabletten dann durch den Schlechtkanal bzw. den Gutkanal. Dabei werden insbesondere durch die in dem Gutkanal angeordnete zweite Unterdruckeinrichtung Tabletten bereits von der Matrizenscheibe abgesaugt und weiter durch den Gutkanal gefördert. Insbesondere können durch die zweite Unterdruckeinrichtung sämtliche aus den Matrizenbohrungen ausgestoßenen Tabletten, die nicht durch die Aussortiereinrichtung in Richtung des Schlechtkanals abgelenkt wurden, in den Gutkanal gesaugt werden. Dadurch wird sichergestellt, dass beispielsweise bei einem Stopp der Rundläufertablettenpresse keine lose auf der Matrizenscheibe liegenden Tabletten zurückbleiben.

Im Stand der Technik vorgesehene Düsenanordnungen zum Fördern der Tabletten durch den Schlechtkanal bzw. den Gutkanal können entfallen. Dadurch werden die im Stand der Technik auftretenden, die Tablettendetektion erschwerenden Staubaufwirbelungen und Verschmutzungen sicher vermieden. Die Tabletten werden in dem Schlechtkanal bzw. dem Gutkanal außerdem beschleunigt und vereinzelt, so dass Abstände zwischen den Tabletten größer werden. Dadurch wird ein Aufstauen von Tabletten sicher vermieden. Durch den vergrößerten Abstand zwischen den durch die Unterdruckeinrichtungen angesaugten Tabletten wird außerdem die erfindungsgemäße redundante Detektion aussortierter Schlechttabletten verbessert.

Die erste Detektoreinrichtung kann in der ersten Unterdruckeinrichtung angeordnet sein und/oder die zweite Detektoreinrichtung kann in der zweiten Unterdruckeinrichtung angeordnet sein. Durch den Einsatz einer Unterdruckeinrichtung wird Tablettenstaub wie erläutert abgesaugt. Dies gilt insbesondere innerhalb der Unterdruckeinrichtung in Strömungsrichtung direkt hinter dem Anschluss eines Saugrohrabschnitts. Beispielsweise in diesem Bereich können Lichtschranken platziert werden, deren Optik dann jederzeit sauber bleibt, so dass diese durch die Unterdruckeinrichtung geförderte Tabletten zuverlässig detektieren können. Die Detektoreinrichtung kann also in Strömungsrichtung des Gases bzw. der Luft durch die Querschnittsverengung der Unterdruckeinrichtung unmittelbar hinter dem Anschlussbereich eines Saugrohrabschnitts für das durch den Unterdruck angesaugte Gas, insbesondere Luft, angeordnet werden.

Die erfindungsgemäße Rundläufertablettenpresse kann weiterhin eine Unterdrucksteuereinrichtung umfassen, die den von der ersten Unterdruckeinrichtung erzeugten Unterdruck und den von der zweiten Unterdruckeinrichtung erzeugten Unterdruck steuert, wobei die Unterdrucksteuereinrichtung den von der ersten Unterdruckeinrichtung erzeugten Unterdruck und den von der zweiten Unterdruckeinrichtung erzeugten Unterdruck unabhängig voneinander, insbesondere also unterschiedlich einstellen kann. Die Unterdrucksteuereinrichtung kann weiterhin eine Speichereinrichtung umfassen, in der für bestimmte Betriebsarten, beispielsweise bestimmte zu verpressende Produkte, Soll-Unterdrücke für die erste und die zweite Unterdruckeinrichtung hinterleget sind. Die Unterdrucksteuereinrichtung greift dann abhängig von der jeweiligen Betriebsart auf die Speichereinrichtung zu und stellt die von der ersten bzw. zweiten Unterdruckeinrichtung erzeugten Unterdrücke auf den jeweils gespeicherten Wert ein. Auf diese Weise können die Unterdruckeinrichtungen besonders gezielt auf die jeweilige Anwendung eingestellt werden.

Ein Ausführungsbeispiel der Erfindung wird nachfolgend anhand von Figuren näher erläutert. Es zeigen schematisch:
- Fig. 1: eine teilweise geschnittene Ansicht von oben auf eine erfindungsgemäße Rundläufertablettenpresse,
- Fig. 2: einen Schnitt durch die Ansicht aus Fig. 1 entlang der Linie 2-2, und
- Fig. 3: einen Schnitt durch die Ansicht aus Fig. 1 entlang der Linie 3-3.

Soweit nichts anderes angegeben ist, bezeichnen in den Figuren gleiche Bezugszeichen gleiche Gegenstände.

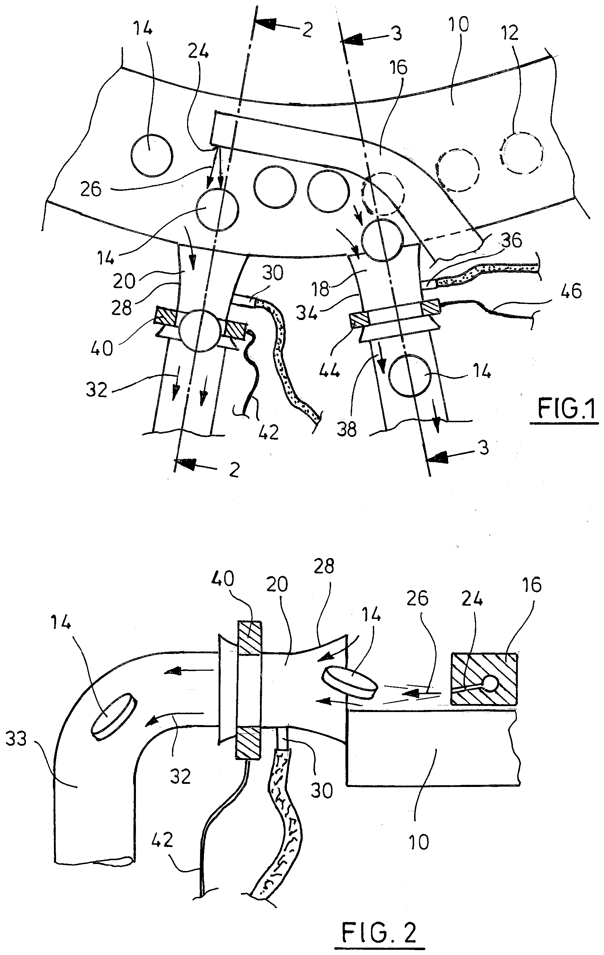

In Fig. 1 ist ein Teil einer erfindungsgemäßen Rundläuferpresse in einer teilweise geschnittenen Aufsicht gezeigt. Die nicht näher dargestellte Rundläuferpresse besitzt in an sich bekannter Weise ein Gehäuse, in dem ein durch einen Antrieb um eine vertikale Achse drehend angetriebener Rotor angeordnet ist. Der Rotor besitzt eine in Fig. 1 bei dem Bezugszeichen 10 gezeigte Matrizenscheibe. Die Matrizenscheibe 10 kann einstückig ausgebildet sein oder aus mehreren Ringsegmenten zusammengesetzt sein. Die Matrizenscheibe 10 weist eine Reihe von entlang einer Kreisbahn angeordneten Matrizenbohrungen 12 auf. Den Matrizenbohrungen 12 ist jeweils ein Paar aus Oberstempel und Unterstempel (nicht dargestellt) zugeordnet. In an sich bekannter Weise sind die Oberstempel und die Unterstempel in Oberstempelaufnahmen und Unterstempelaufnahmen axial geführt. Ihre im Zuge eines Umlaufs ausgeführte axiale Bewegung wird in ebenfalls an sich bekannter Weise durch geeignete Steuerkurven gesteuert. In einer nicht dargestellten Fülleinrichtung der Rundläuferpresse in die Matrizenbohrungen 12 gefülltes Pressmaterial wird in ebenfalls an sich bekannter Weise in mindestens einer Pressstation der Rundläuferpresse durch die Oberstempel und Unterstempel in den Matrizenbohrungen 12 zu Tabletten verpresst. Die Matrizenbohrungen 12 können durch in die Matrizenscheibe 10 lösbar eingesetzte Matrizen gebildet sein. Es ist jedoch auch denkbar, dass die Ober- und Unterstempel der Rundläufertablettenpresse zur Erzeugung von Tabletten unmittelbar mit den Matrizenbohrungen 12 der Matrizenscheibe 10 zusammenwirken.

Nach dem Erzeugen der Tabletten 14 werden diese durch die Unterstempel aus den Matrizenbohrungen 12 ausgestoßen, so dass sie sich auf der Oberseite der Matrizenscheibe 10 befinden. Der Matrizenscheibe 10 ist ein Abstreifer 16 mit einer sichelförmigen Ablenkfläche zugeordnet, unter dem die Matrizenscheibe 10 hindurch dreht. Wie insbesondere in Fig. 1 gut zu erkennen, streift der Abstreifer 16 die auf der Oberseite der Matrizenscheibe 10 befindlichen Tabletten 14 in Richtung eines Gutkanals 18 ab. In Drehrichtung der Matrizenscheibe 10 befindet sich vor dem Gutkanal 18 ein Schlechtkanal 20. Dem Schlechtkanal 20 gegenüberliegend ist in den Abstreifer 16 eine Auswerfdüse 24 integriert. Wird die Auswerfdüse 24 aktiviert, erzeugt sie einen Luftstoß in Richtung des Schlechtkanals 20, wie in den Figuren 1 und 2 bei dem Bezugszeichen 26 veranschaulicht. Dieser Luftstoß lenkt eine sich im Bereich der Auswerfdüse 24 befindende Tablette 14 vor Erreichen des Abstreifers 16 in den Schlechtkanal 20 ab. Die Auswerfdüse 24 wird von einer nicht näher dargestellten Steuereinrichtung, beispielsweise der Maschinensteuerung der Rundläufertablettenpresse, aktiviert, wenn die Steuereinrichtung von einer ebenfalls nicht näher dargestellten Prüfeinrichtung, beispielsweise einer Presskraftmesseinrichtung, der Rundläufertablettenpresse ein Schlechtsignal erhält. Die Prüfeinrichtung prüft beispielsweise die beim Erzeugen der Tabletten 14 erzeugte Presskraft und erzeugt ein Schlechtsignal, wenn die Presskraft von einem Sollwert in unzulässiger Weise abweicht. Dieser grundsätzliche Aufbau ist bekannt und soll daher nicht näher erläutert werden.

In dem Schlechtkanal 20 befindet sich eine erste Unterdruckeinrichtung 28, insbesondere eine Venturi-Düse, mit einer Querschnittsverengung, in deren Bereich ein Saugrohrabschnitt 30 angeschlossen ist. Im Betrieb erzeugt die durch die Querschnittsverengung der Unterdruckeinrichtung 28 strömende Luft im Bereich der Querschnittsverengung einen Unterdruck, so dass über den Saugrohrabschnitt 30 Luft angesaugt und in Förderrichtung von der Matrizenscheibe 10 weg durch den Schlechtkanal 20 mitgerissen wird, wie durch die Pfeile 32 veranschaulicht. Dadurch werden von der Auswerfdüse 24 in den Schlechtkanal 20 geleitete Tabletten 14 ebenfalls mitgerissen und durch den Schlechtkanal 20 abgefördert in einen in Fig. 2 bei dem Bezugszeichen 33 gezeigten Kanalabschnitt, der beispielsweise zu einem Schlechtbehälter für auszusortierende Tabletten führt.

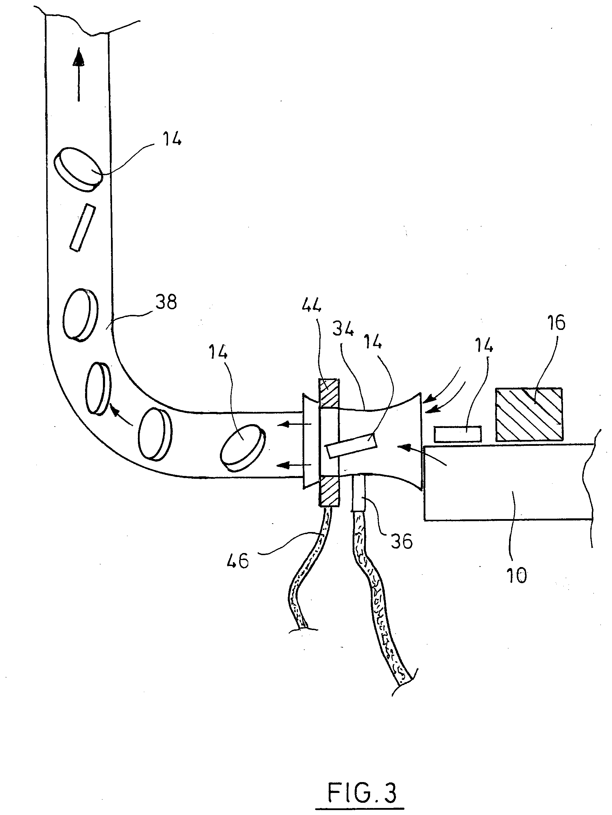

In dem Gutkanal 18, in den der Abstreifer 16 durch die Auswerfdüse 24 nicht aussortierte Tabletten 14 fördert, befindet sich eine zweite Unterdruckeinrichtung 34, insbesondere eine Venturi-Düse, mit einer Querschnittsverengung, in deren Bereich wiederum ein Saugrohrabschnitt 36 angeschlossen ist. Wie bei der ersten Unterdruckeinrichtung 28 führt auch die Querschnittsverengung der zweiten Unterdruckeinrichtung 34 dazu, dass durch diese strömende Luft einen Unterdruck erzeugt, der über den Saugrohrabschnitt 36 Luft ansaugt, die dann wiederum in Förderrichtung von der Matrizenscheibe 10 weg durch den Gutkanal 18 mitgerissen wird, wie durch den Pfeil 38 veranschaulicht. Dadurch werden in dem gezeigten Beispiel sämtliche vollständig durch die Unterstempel aus den Matrizenbohrungen 12 ausgestoßenen Tabletten, die nicht in den Schlechtkanal 20 abgelenkt wurden, von der Matrizenscheibe in den Gutkanal 18 abgesaugt und durch den Gutkanal 18 hindurch abgefördert in einen Steigkanalabschnitt 38 eines sich an den Gutkanal 18 anschließenden Förderkanals. Wie insbesondere in Fig. 3 zu erkennen, führt der Steigkanalabschnitt 38 gegenüber der zweiten Unterdruckeinrichtung 34 auf ein größeres Höhenniveau. Gegebenenfalls können im weiteren Verlauf des Förderkanals eine oder mehrere weitere Unterdruckeinrichtungen vorgesehen sein.

In der ersten Unterdruckeinrichtung 28 befindet sich in Strömungsrichtung kurz hinter dem Anschluss des Saugrohrabschnitts 30 eine Rohrlichtschranke 40. Über eine Leitung 42 ist diese beispielsweise mit der Maschinensteuerung der Rundläufertablettenpresse verbunden. In der zweiten Unterdruckeinrichtung 34 befindet sich in Strömungsrichtung kurz hinter dem Anschluss des Saugrohrabschnitts 36 ebenfalls eine Rohrlichtschranke 44, die über eine Leitung 46 ebenfalls beispielsweise mit der Maschinensteuerung der Rundläufertablettenpresse verbunden ist. Die Lichtschranken 40, 44 detektieren vorbeigeförderte Tabletten 14. Insbesondere detektiert die in der ersten Unterdruckeinrichtung 28 vorgesehene Lichtschranke 40 eine von der Auswerfdüse 24 aussortierte und in den Schlechtkanal 20 geleitete Tablette 14 und die in der zweiten Unterdruckeinrichtung 34 angeordnete Lichtschranke 44 detektiert entsprechend eine Lücke in dem von dem Abstreifer 16 in den Gutkanal 18 geleiteten Tablettenstrom 14. Auf diese Weise wird eine zuverlässige redundante Detektion der aussortierten Tabletten gewährleistet.

## Patentansprüche

1. Rundläufertablettenpresse, umfassend einen drehend angetriebenen Rotor mit einer Matrizenscheibe (10) mit Matrizenbohrungen (12) und einer Mehrzahl von mit der Matrizenscheibe (10) umlaufenden Ober- und Unterstempeln zum Erzeugen von Tabletten (14) in den Matrizenbohrungen (12), wobei der Matrizenscheibe (10) des Rotors ein Abstreifer (16) zugeordnet ist, der in den Matrizenbohrungen (12) erzeugte und durch die Unterstempel aus den Matrizenbohrungen (12) ausgestoßene Tabletten (14) von der Oberseite der Matrizenplatte in einen Gutkanal (18) lenkt, wobei in Drehrichtung des Rotors vor dem Gutkanal (18) ein Schlechtkanal (20) angeordnet ist, dem eine Aussortiereinrichtung (24) zum Aussortieren von Tabletten in den Schlechtkanal (20) zugeordnet ist, wobei ferner eine Prüfeinrichtung an der Rundläufertablettenpresse angeordnet ist, welche mindestens eine Eigenschaft der in den Matrizenbohrungen (12) erzeugten Tabletten (14) überprüft und ein Schlechtsignal für eine Steuereinrichtung erzeugt, wenn die geprüfte Eigenschaft einer Tablette von einem Sollwert unzulässig abweicht, so dass die Steuereinrichtung die Aussortiereinrichtung (24) zur Aussortierung der betreffenden Tablette betätigt, wobei in dem Schlechtkanal (20) eine erste Detektoreinrichtung angeordnet ist, die durch den Schlechtkanal (20) geleitete Tabletten (14) detektiert, **dadurch gekennzeichnet, dass** in dem Gutkanal (18) eine zweite Detektoreinrichtung angeordnet ist, die durch den Gutkanal (18) geleitete Tabletten (14) detektiert, dass in dem Schlechtkanal (20) eine erste Unterdruckeinrichtung (28) derart angeordnet ist, dass durch die Aussortiereinrichtung (24) in Richtung des Schlechtkanals (20) geleitete Tabletten (14) durch den von der ersten Unterdruckeinrichtung (28) erzeugten Unterdruck durch den Schlechtkanal (20) abgefördert werden, und dass in dem Gutkanal (18) eine zweite Unterdruckeinrichtung (34) derart angeordnet ist, dass durch den Abstreifer (16) in Richtung des Gutkanals (18) geleitete Tabletten (14) durch den von der zweiten Unterdruckeinrichtung (34) erzeugten Unterdruck von der Matrizenscheibe abgesaugt und durch den Gutkanal (18) ab gefördert werden.

2. Rundläufertablettenpresse nach Anspruch 1, **dadurch gekennzeichnet, dass** die erste Detektoreinrichtung eine Lichtschranke (40) umfasst und/oder dass die zweite Detektoreinrichtung eine Lichtschranke (44) umfasst.

3. Rundläufertablettenpresse nach einem der vorhergehenden Ansprüche, **dadurch gekennzeichnet, dass** die erste Unterdruckeinrichtung (28) eine Venturi-Düse ist und/oder dass die zweite Unterdruckeinrichtung (34) eine Venturi-Düse ist.

4. Rundläufertablettenpresse nach einem der vorhergehenden Ansprüche, **dadurch gekennzeichnet, dass** die erste Detektoreinrichtung in der ersten Unterdruckeinrichtung (28) angeordnet ist und/oder dass die zweite Detektoreinrichtung in der zweiten Unterdruckeinrichtung (34) angeordnet ist.

5. Rundläufertablettenpresse nach einem der vorhergehenden Ansprüche, **dadurch gekennzeichnet, dass** sie weiterhin eine Unterdrucksteuereinrichtung umfasst, die den von der ersten Unterdruckeinrichtung (28) erzeugten Unterdruck und den von der zweiten Unterdruckeinrichtung (34) erzeugten Unterdruck steuert, wobei die Unterdrucksteuereinrichtung den von der ersten Unterdruckeinrichtung (28) erzeugten Unterdruck und den von der zweiten Unterdruckeinrichtung (34) erzeugten Unterdruck unabhängig voneinander einstellen kann.

## Claims

1. A rotary press for tablets, comprising a rotationally driven rotor having a die plate (10) with die holes (12) and having a plurality of upper and lower punches that revolve with the die plate (10) for producing tablets (14) in the die holes (12), wherein the die plate (10) of the rotor is assigned a scraper (16), which guides tablets (14), produced in the die holes (12) and discharged from the die holes (12) by the lower punches, from the top side of the die plate into a good channel (18), wherein a bad channel (20) is arranged in front of the good channel (18) in the direction of rotation of the rotor, which bad channel is assigned a rejection apparatus (24) for rejecting tablets into the bad channel (20), wherein a checking apparatus is also arranged on the rotary press for tablets, which checking apparatus checks at least one property of the tablets (14) produced in the die holes (12) and generates a bad signal for a control apparatus if the checked property of a tablet deviates to an impermissible extent from a target value such that the control apparatus actuates the rejection apparatus (24) for rejecting the relevant tablet, wherein a first detector apparatus that detects tablets (14) guided through the bad channel (20) is arranged in the bad channel (20), **characterized in that** a second detector apparatus that detects tablets (14) guided through the good channel (18) is arranged in the good channel (18), **in that** a first vacuum apparatus (28) is arranged in the bad channel (20) such that tablets (14) guided by the rejection apparatus (24) toward the bad channel (20) are conveyed away through the bad channel (20) by means of the vacuum generated by the first vacuum apparatus (28), and **in that** a second vacuum apparatus (34) is arranged in the good channel (18) such that tablets (14) guided by the scraper (16) toward the good channel (18) are sucked away from the die plate and conveyed away through the good channel (18) by means of the vacuum generated by the second vacuum apparatus (34).

2. The rotary press for tablets according to claim 1, **characterized in that** the first detector apparatus comprises a light barrier (40) and/or **in that** the second detector apparatus comprises a light barrier (44).

3. The rotary press for tablets according to any one of the preceding claims, **characterized in that** the first vacuum apparatus (28) is a Venturi nozzle and/or **in that** the second vacuum apparatus (34) is a Venturi nozzle.

4. The rotary press for tablets according to any one of the preceding claims, **characterized in that** the first detector apparatus is arranged in the first vacuum apparatus (28) and/or **in that** the second detector apparatus is arranged in the second vacuum apparatus (34).

5. The rotary press for tablets according to any one of the preceding claims, **characterized in that** it further comprises a vacuum control apparatus, which controls the vacuum generated by the first vacuum apparatus (28) and the vacuum generated by the second vacuum apparatus (34), wherein the vacuum control apparatus can adjust the vacuum generated by the first vacuum apparatus (28) and the vacuum generated by the second vacuum apparatus (34) independently of one another.

## Revendications

1. Presse à comprimés rotative, comprenant un rotor entraîné en rotation avec un disque de matrice (10) pourvu de cavités de matrice (12) et de multiples poinçons supérieurs et inférieurs tournant avec le disque de matrice (10) pour façonner des comprimés (14) à l'intérieur des cavités de matrice (12), dans laquelle un racloir (16) est associé au disque de matrice (10) du rotor, qui dirige les comprimés (14) façonnés dans les cavités de matrice (12) et éjectés des cavités de matrice (12) par les poinçons inférieurs du dessus de la plaque de matrice dans une goulotte de décharge de bons produits (18), dans laquelle une goulotte de décharge de mauvais produits (20) est disposée dans le sens de rotation du rotor en amont de la goulotte de décharge de bons produits (18) et à laquelle un dispositif de tri (24) est associé pour sélectionner les comprimés à extraire dans la goulotte de décharge de mauvais produits (20), dans laquelle un dispositif de contrôle est disposé en plus sur la presse à comprimés rotative, lequel vérifie au moins une caractéristique des comprimés (14) façonnés dans les cavités de matrice (12) et génère un signal de mauvais état à destination d'un dispositif de commande, lorsque la caractéristique contrôlée d'un comprimé s'écarte d'une valeur de consigne de manière inadmissible, de sorte que le dispositif de commande actionne le dispositif de tri (24) afin d'extraire le comprimé concerné, dans laquelle un premier dispositif de détection est disposé dans la goulotte de décharge de mauvais produits (20), qui détecte les comprimés (14) amenés à travers la goulotte de décharge de mauvais produits (20), **caractérisée en ce qu'**un second dispositif de détection est disposé dans la goulotte de décharge de bons produits (18), qui détecte les comprimés (14) amenés à travers la goulotte de décharge de bons produits (18), qu'un premier dispositif à dépression (28) est disposé dans la goulotte de décharge de mauvais produits (20) de telle manière que les comprimés amenés par le dispositif de tri (24) en direction de la goulotte de décharge de mauvais produits (20) sont évacués à travers la goulotte de décharge de mauvais produits (20) par la dépression créée par le premier dispositif à dépression (28) et qu'un second dispositif à dépression (34) est disposé dans la goulotte de décharge de bons produits (18) de telle manière que les comprimés amenés par le racloir (16) en direction de la goulotte de décharge de bons produits (18) sont aspirés par la dépression créée par le second dispositif à dépression (34) et évacués à travers la goulotte de décharge de bons produits (18).

2. Presse à comprimés rotative selon la revendication 1, **caractérisée en ce que** le premier dispositif de détection comprend une cellule photoélectrique (40) et / ou le second dispositif de détection comprend une cellule photoélectrique (44).

3. Presse à comprimés rotative selon l'une des revendications précédentes, **caractérisée en ce que** le premier dispositif à dépression (28) est une buse à effet Venturi et / ou le second dispositif à dépression (34) est une buse à effet Venturi.

4. Presse à comprimés rotative selon l'une des revendications précédentes, **caractérisée en ce que** le premier dispositif de détection est disposé dans le premier dispositif à dépression (28) et / ou le second dispositif de détection est disposé dans le second dispositif à dépression (34).

5. Presse à comprimés rotative selon l'une des revendications précédentes, **caractérisée en ce qu'**elle comprend en outre un dispositif de commande de dépression, qui commande la dépression créée par le premier dispositif à dépression (28) et la dépression créée par le second dispositif à dépression (34), dans laquelle le dispositif de commande de dépression peut régler la dépression créée par le premier dispositif à dépression (28) et la dépression créée par le second dispositif à dépression (34) indépendamment l'une de l'autre.
